(19) Europäisches Patentamt
European Patent Office
Office européen des brevets

(11) EP 1 077 237 B1

(12) # EUROPÄISCHE PATENTSCHRIFT

(45) Veröffentlichungstag und Bekanntmachung des Hinweises auf die Patenterteilung:
**05.04.2017 Patentblatt 2017/14**

(21) Anmeldenummer: **00117814.4**

(22) Anmeldetag: **18.08.2000**

(51) Int Cl.:
***C09D 5/02*** (2006.01)
***C08F 220/12*** (2006.01)
*C08F 2/26* (2006.01)
*C08F 220/12* (2006.01)
*C08F 220/06* (2006.01)
***C08F 2/24*** (2006.01)
*C08F 2/24* (2006.01)
*C08F 2/30* (2006.01)
*C08F 212/06* (2006.01)

(54) **Bindemittelzubereitungen auf der Basis wässriger Polymerdispersionen**

Binder compositions Based on aqueous polymer dispersions

Compositions liantes à base de dispersions aqueuses

(84) Benannte Vertragsstaaten:
**AT BE CH CY DE DK ES FI FR GB GR IE IT LI LU MC NL PT SE**

(30) Priorität: **19.08.1999 DE 19939327**

(43) Veröffentlichungstag der Anmeldung:
**21.02.2001 Patentblatt 2001/08**

(73) Patentinhaber: **BASF SE**
**67056 Ludwigshafen am Rhein (DE)**

(72) Erfinder:
- **Baumstark, Roland**
  **67434 Neustadt (DE)**
- **Kirsch, Stefan**
  **55262 Heidesheim (DE)**
- **Dersch, Rolf**
  **67434 Neustadt (DE)**
- **Dobbelaar, Johannes**
  **249325 Singapore (SG)**
- **Melan, Michael**
  **67157 Wachenheim (DE)**

(56) Entgegenhaltungen:
**EP-A- 0 810 274**

- **EUROPEAN COMMITTEE FOR STANDARDIZATION: "PAINTS AND VARNISHES - TERMS AND DEFINITIONS FOR COATING MATERIALS - PART 1: GENERAL TERMS" , EUROPAEISCHE NORM - EUROPEAN STANDARD - NORME EUROPEENNE,XX,XX, PAGE(S) 1-28 XP002066658 * Definition 1.38 ***

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Bindemittelzubereitungen mit einer Mindestfilmbildetemperatur unterhalb 10 °C auf der Basis einer wässrigen Polymerdispersion.

Aus Gründen des Umweltschutzes und aus arbeitshygienischen Gründen enthalten moderne Beschichtungsmittel, insbesondere solche, die in geschlossenen Räumen verarbeitet werden, wie beispielsweise Dispersionsfarben und -putze, eine Bindemittelzubereitung auf Basis einer wässrigen Polymerdispersion. Die in der Polymerdispersion enthaltenen Polymerteilchen verfilmen beim Trocknen zu einer polymeren Beschichtung, die gegebenenfalls anwesende Pigmentteilchen und Füllstoffe bindet.

Die Ausbildung einer gleichmäßigen und damit stabilen polymeren Beschichtung ist jedoch nur dann gewährleistet, wenn das Beschichtungsmittel bei einer Temperatur verarbeitet wird, die oberhalb der Mindestfilmbildetemperatur des Polymeren in der Bindemittelzubereitung liegt.

Eine niedrige Mindestfilmbildetemperatur ist grundsätzlich bei Verwendung von Bindemitteln gewährleistet, deren Polymere eine niedrige Glasübergangstemperatur aufweisen. Diese Bindemittel haben jedoch den Nachteil, dass der Polymerfilm weich bleibt und klebrig ist. Dies wiederum hat eine geringe Blockfestigkeit der Beschichtung und eine starke Anschmutzneigung zur Folge. Alternativ kann die Mindestfilmbildetemperatur eines polymeren Bindemittels dadurch abgesenkt werden, dass man es mit Filmbildehilfsmitteln (Koaleszenzmitteln) verarbeitet. Hierbei handelt es sich um flüchtige organische Verbindungen, beispielsweise Lösungsmittel oder Weichmacher, die beim Trocknen der Beschichtung zunächst die Filmbildung erleichtern und beim weiteren Trocknen an die Umgebung abgegeben werden, wodurch sich die Oberflächenhärte des Polymerfilms erhöht und seine Klebrigkeit erniedrigt. Dieser Vorgang wiederum führt jedoch zu einer nicht erwünschten Belastung der Umwelt. Es besteht daher ein erhöhter Bedarf an Bindemitteln auf Basis wässriger Polymerdispersionen, die ohne Zusatz von Koaleszenzhilfsmitteln eine gleichmäßige Filmbildung gewährleisten, und die zu Beschichtungen mit hoher Blockfestigkeit und niedriger Anschmutzneigung führen.

Aus der EP-A-609 756 und der EP-612 805 sind Bindemittel auf Basis wässriger Polymerdispersionen bekannt, die für die Herstellung lösungsmittelfreier Dispersionen geeignet sind. Bei den Bindemittelpolymeren handelt es sich um mehrphasige Stufenpolymere aus einer harten Polymerphase und einer weichen Polymerphase. Derartige Polymere sind jedoch hinsichtlich ihrer Herstellung vergleichsweise aufwendig.

Die EP-A-466 409 beschreibt koaleszenzmittelfreie Beschichtungsmittel, die als Bindemittel einen Blend zweier wässriger Polymerdispersionen enthalten. Dabei weist das Polymer der einen Polymerdispersion eine Glasübergangstemperatur oberhalb Raumtemperatur und das andere Polymer eine Glasübergangstemperatur unterhalb 20°C auf.

Die EP-810 274 beschreibt Bindemittel für emissionsarme Beschichtungsmittel auf Basis wäßriger Styrolacrylatpolymerdispersionen mit einer mittleren Filmbildetemperatur unterhalb 10 °C, die weniger als 1 Gew.-% saure Monomere einpolymerisiert enthalten. Derartige Bindemittel sind insbesondere für hochpigmentierte Beschichtungen, d.h. für Beschichtungen mit einer Pigmentvolumenkonzentration PVK $\geq$ 60 geeignet. Unter der Pigmentvolumenkonzentration PVK versteht man hier und im Folgenden den mit 100 multiplizierten Quotienten aus dem Gesamtvolumen von Pigmenten plus Füllstoffen geteilt durch das Gesamtvolumen aus Pigmenten, Füllstoffen und Bindemittelpolymeren; vgl. Ullmanns Enzyklopädie d. Techn. Chem., 4. Aufl., Bd. 15, S. 667. Während diese Bindemittel bei hohen Pigmentgehalten zu einer erhöhten Nassabriebfestigkeit der Beschichtungen führen, lässt ihre Oberflächenklebrigkeit und Blockfestigkeit bei geringeren Pigmentgehalten zu wünschen übrig.

Der vorliegenden Erfindung liegt somit die Aufgabe zugrunde, ein Bindemittel auf Basis einer wässrigen Polymerdispersion bereitzustellen, das sowohl eine gleichmäßige Filmbildung auch ohne den Zusatz von Koaleszenshilfsmitteln gewährleistet als auch zu Beschichtungen mit geringer Klebrigkeit und hoher Blockfestigkeit führt.

Es wurde nun überraschenderweise gefunden, dass die nachstehend definierten Bindemittelzubereitungen auf Basis wässriger Polymerdispersionen diese Anforderungen in besonderem Maße erfüllen. Demnach betrifft die vorliegende Erfindung Bindemittelzubereitungen mit einer Mindestfilmbildetemperatur unterhalb 10 °C, enthaltend wenigstens ein Bindemittelpolymer P in Form einer wässrigen Dispersion, die wenigstens einen anionischen Emulgator und wenigstens einen nichtionischen Emulgator enthält, worin das Bindemittelpolymer P aufgebaut ist aus:

- 20 bis 50 Gew.-% wenigstens eines Monomers A1, ausgewählt unter vinylaromatischen Monomeren,
- 0 bis 15 Gew.-% eines oder mehrerer Monomere A2, ausgewählt unter den $C_1$-$C_4$-Alkylestern der Methacrylsäure,
- 0 bis 30 Gew.-% eines oder mehrerer Monomere A3, ausgewählt unter Acrylnitril und Methacrylnitril,
- 45 bis 70 Gew.-% wenigstens eines Monomers B, dessen Homopolymerisat eine Glasübergangstemperatur unterhalb 10°C aufweist, und das ausgewählt ist unter den $C_1$-$C_{18}$-Al-kylestern der Acrylsäure und den $C_5$-$C_{18}$-Alkylestern der Methacrylsäure,

- 2 bis 4 Gew.-% Methacrylsäure als Monomer C
- 0 bis 3 Gew.-% eines oder mehrerer Monomere D, ausgewählt unter den Amiden, den Hydroxy-$C_1$-$C_4$-alkylestern, und den $C_1$-$C_4$-Alkyl-polyalkylenoxidestern monoethylenisch ungesättigter $C_3$-$C_6$-Monocarbonsäuren,
- 0 bis 5 Gew.-% eines oder mehrerer von den Monomeren A1, A2, A3, B, C und D verschiedener Monomere E,

wobei die Gewichtsanteile aller Monomere auf 100 Gew.-% bezogen sind, die Summe der Gewichtsanteile der Monomere A1, A2 und A3 55 Gew.-%, vorzugsweise 50 Gew.-% nicht überschreitet und der Gewichtsanteil der Monomere A2 wenigstens 5 Gew.-% beträgt, wenn der Gewichtsanteil der Monomere A3 0,5 Gew.-% unterschreitet. Vorzugsweise enthalten die erfindungsgemäßen Bindemittelzubereitungen das Bindemittelpolymer P als alleiniges Bindemittel.

Die Mindestfilmbildetemperatur MFT ist als die Temperatur definiert, unterhalb derer das Polymer in dem Beschichtungsmittel keinen geschlossenen Polymerfilm mehr bildet. Die Mindestfilmbildetemperatur liegt vorzugsweise im Bereich von 10 bis 0 °C. Als Mindestfilmbildetemperaturen gelten die in Anlehnung an DIN 53787 bestimmten Werte (s. Ullmanns Enzyklopädie d. Techn. Chem., 4. Aufl., Bd. 19, S. 17) Die MFT korreliert näherungsweise mit der Glasübergangstemperatur Tg des Bindemittelpolymers P. Sie liegt in der Regel bis zu 10 K unterhalb seiner Glasübergangstemperatur. Dementsprechend weist das Bindemittelpolymer P in der Regel eine Glasübergangstemperatur Tg von maximal 20 °C und vorzugsweise maximal 15 °C auf. In der Regel wird das Bindemittelpolymer eine Glasübergangstemperatur Tg von -10 °C und vorzugsweise -5 °C und insbesondere 0 °C nicht unterschreiten.

Der Begriff Glasübergangstemperatur meint in dieser Schrift die nach dem DSC-Verfahren (Differential Scanning Calorimetry, 20 °C/min, midpoint) ermittelte Glasübergangstemperatur (vgl. ASTM D 3418-82).

Der Fachmann wird zur Einstellung der gewünschten Tg bei der Herstellung des Polymeren P von einer geeigneten Monomermischung ausgehen. Nach Fox (T.G. Fox, Bull. Am. Phys. Soc. (Ser. II) 1, 1956, p. 123 und Ullmann's Enzyklopädie der Techn. Chem., 4. Aufl., Bd. 19, Verlag Chemie, Weinheim (1980), S.17-18) gilt nämlich für die Glasübergangstemperatur von Mischpolymerisaten bei großen Molmassen in guter Nährung

$$\frac{1}{T_g} = \frac{X^1}{T_g^1} + \frac{X^2}{T_g^2} + \cdots \frac{X^n}{T_g^n}$$

wobei $X^1, X^2, ..., X^n$ die Massenbrüche der Monomeren 1, 2, ..., n und $T_g^1, T_g^2, ..., T_g^n$ die Glasübergangstemperaturen der jeweils nur aus einem der Monomeren 1, 2, ..., n aufgebauten Homopolymeren in Grad Kelvin bedeuten. Quellen für tabellierte Glasübergangstemperaturen von Homopolymeren sind z. B. Ullmann's Encyclopedia of Ind. Chem., 5th ed., VCH, Weinheim, Vol. A 21 (1992) S.169 und J. Brandrup, E.H. Immergut, Polymer Handbook 2nd ed, J. Wiley, New York, 1975, p. 139-192.

Beispiele für vinylaromatische Monomere A1 sind Styrol, $\alpha$-Methylstyrol, $C_1$-$C_4$-Alkylstyrole wie Methylstyrole und tert.-Butylstyrol sowie Methoxystyrole. Bevorzugtes Monomer A1 ist Styrol. Vorzugsweise enthält das erfindungsgemäße Bindemittelpolymer P die Monomere A1 in einer Menge von 20 bis 40 Gew.-% und insbesondere von 20 bis 35 Gew.-% einpolymerisiert.

Beispiele für Monomere A2 sind Methylmethacrylat, Ethylmethacrylat, n-Propylmethacrylat, n-Butylmethacrylat, Isobutylmethacrylat und tert.-Butylmethacrylat. Bevorzugtes Monomer A2 ist Methylmethacrylat. Vorzugsweise enthalten die Bindemittelpolymere P wenigstens 5 Gew.-% und insbesondere 5 bis 15 Gew.-% Monomere A2 einpolymerisiert. Besonders bevorzugt enthält das Bindemittelpolymer P 20 bis 40 Gew.-%, insbesondere 20 bis 35 Gew.-% Styrol und 5 bis 15 Gew.-%, insbesondere 5 bis 10 Gew.-% Methylmethacrylat einpolymerisiert.

Die Monomere B umfassen beispielsweise die Ester der Acrylsäure mit $C_2$-$C_{18}$-Alkanolen, vorzugsweise mit $C_1$-$C_{10}$-Alkanolen und insbesondere $C_1$-$C_8$-Alkanolen. Geeignete $C_2$-$C_{18}$-Alkanole sind Ethanol, n-Propanol, i-Propanol, 1-Butanol, 2-Butanol, n-Hexanol, 2-Ethylhexanol, Laurylalkohol und Stearylalkohol. Weiterhin zählen zu den Monomeren B auch die Ester der Methacrylsäure mit $C_5$-$C_{18}$-Alkanolen. Beispiele für bevorzugte Monomere B sind Ethylacrylat, n-Butylacrylat, i-Butylacrylat, n-Hexylacrylat, 2-Ethylhexylacrylat, n-Hexylmethacrylat, 2-Ethylhexylmethacrylat. Besonders bevorzugte Monomere B sind Ethylacrylat, n-Butylacrylat und 2-Ethylhexylacrylat. Vorzugsweise enthält das Bindemittelpolymer P die Monomere B in einer Menge von 50 bis 65 Gew.-% einpolymerisiert.

Daneben kann das Bindemittelpolymer P in untergeordneter Menge, d. h. < 0,5 Gew.-%, bezogen auf das Gesamtgewicht aller Monomere auch andere Monomere mit Säuregruppen wie Acrylsäure, Itakonsäure, Vinylessigsäure, 2-(Acrylamido)-2-methylpropansulfonsäure, Vinylsulfonsäure oder Vinylphosphonsäure einpolymerisiert enthalten, wobei die Monomere mit Säuregruppe häufig in ihrer Salzform, z. B. als Alkali- oder Ammoniumsalz, eingesetzt werden.

Zu den unter den Monomeren D genannten Amiden monoethylenisch ungesättigter $C_3$-$C_6$-Monocarbonsäuren zählen beispielsweise die Amide der Acrylsäure und der Methacrylsäure. Zu den unter den Monomeren D genannten Hydroxy-$C_1$-$C_4$-alkylestern monoethylenisch ungesättigter $C_3$-$C_6$-Monocarbonsäuren zählen beispielsweise die 2-Hydroxyethylester, die 2- oder 3-Hydroxypropylester, die 2- oder 4-Hydroxybutylester der Acrylsäure und die der Methacrylsäure. Zu den Monomeren D zählen weiterhin die Ester monoethylenisch ungesättigter $C_3$-$C_6$-Carbonsäuren mit Polyalkylenglykolen und deren Halbether, insbesondere die Ester mit Polyethylenglykolen und die Ester mit Monoalkylethern von Polyethylenglykolen. Beispiele für derartige Monomere sind in der US-5,610,225 genannt. Bevorzugte Monomere D sind Acrylamid, Methacrylamid und Hydroxyethylacrylat. Vorzugsweise werden die Monomere D in einer Menge von wenigstens 0,5 Gew.-%, insbesondere in einer Menge von 0,5 bis 2 Gew.-% und ganz besonders bevorzugt in einer Menge von 1 bis 1,5 Gew.-%, bezogen auf das Gesamtgewicht der das Polymer bildenden Monomere A bis E eingesetzt.

Weiterhin kann das Bindemittelpolymer P auch von den Monomeren A bis D verschiedene Monomere einpolymerisiert enthalten. Zu den Monomeren E zählen zum einen die oben erwähnten, von Methacrylsäure verschiedenen Monomere mit einer Säuregruppe. Der Gewichtsanteil aller Monomere mit Säuregruppe einschließlich Methacrylsäure wird vorzugsweise 4 Gew.-% nicht überschreiten. Insbesondere enthält das erfindungsgemäße Polymer P keine von Methacrylsäure verschiedenen Monomere mit einer Säuregruppe.

Zu den Monomeren E zählen weiterhin Monomere mit zwei oder mehreren, nicht konjugierten Doppelbindungen wie Ethylenglycoldiacrylat, 1,4-Butandioldiacrylat, Allylacrylat und -methacrylat sowie Trimethylolpropantriacrylat und-trimethacrylat. Mehrfach olefinisch ungesättigte Monomere werden, sofern erwünscht, in Mengen < 1 Gew.-%, bezogen auf das Gesamtgewicht aller das Polymer P bildenden Monomere eingesetzt.

Weiterhin zählen zu den Monomeren E auch solche Monomere, die neben einer ethylenisch ungesättigten Doppelbindung eine reaktive, funktionelle Gruppe, z. B. eine Aldehydgruppe, eine Ketogruppe oder eine Oxirangruppe aufweisen. Derartige funktionelle Gruppen im Polymer P führen bei der Filmbildung zu einer Vernetzung oder können mit Hilfe eines Vernetzers bei der Filmbildung vernetzt werden. Beispiele für derartige Monomere E sind Acrolein, Methacrolein, Diacetonacrylamid und -methacrylamid, Acetessigsäurevinylester oder die Ester der Acetessigsäure mit Hydroxyalkylacrylaten und -methacrylaten, z. B. 2-Acetoacetoxyethylacrylat und -methacrylat, weiterhin Glycidylester ethylenisch ungesättigter Carbonsäuren wie Glycidylacrylat und Glycidylmethacrylat. Als zusätzliche Vernetzer kommen nichtflüchtige Polyaminverbindungen, die zwei oder mehrere reaktive Aminogruppen aufweisen in Betracht. Beispiele hierfür sind Oxalsäuredihydrazid, Malonsäuredihydrazid und Adipinsäuredihydrazid.

Zu den Monomeren E zählen weiterhin solche Monomere, die Harnstoffgruppen aufweisen, z. B. N-Vinyl- und N-Allylharnstoff und Derivate des Imidazolidin-2-ons, z. B. N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on, N-[2-((Meth)acryloxyacetamido)ethyl]imidazolidin-2-on etc. Diese Monomere werden vorzugsweise in Mengen von bis zu 10 Gew.-%, insbesondere 0,5 bis 5 Gew.-%, bezogen auf das Gesamtgewicht des Polymeren P, verwendet. Derartige Monomere verbessern die Nasshaftung der aus den erfindungsgemäßen Zubereitungen erhältlichen Beschichtungen, d. h. die Haftung der Beschichtung in feuchtem oder gequollenem Zustand. Monomere mit Harnstoffgruppen werden, sofern erwünscht, in Mengen von 0,1 bis 5 Gew.-%, vorzugsweise 0,2 bis 3 Gew.-% und insbesondere 0,5 bis 2 Gew.-% eingesetzt.

Zu den Monomeren E zählen weiterhin Siloxangruppen enthaltende Monomere, z. B. Vinyltrialkoxysilane, wie Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan. Diese Monomere können in Mengen von bis zu 1 Gew.-%, vorzugsweise 0,05 bis 0,5 Gew.-%, bezogen auf die Gesamtmonomermenge, verwendet werden.

Ganz besonders bevorzugt ist das Polymer P aufgebaut aus

- 50 bis 65 Gew.-%, insbesondere 54 bis 60 Gew.-% n-Butylacrylat und/oder 2-Ethylhexylacrylat,
- 20 bis 40 Gew.-%, insbesondere 25 bis 30 Gew.-% Styrol,
- 5 bis 10 Gew.-% Methylmethacrylat,
- 2 bis 4 Gew.-%, insbesondere 2,2 bis 3 Gew.-% und speziell 2,4 bis 2,8 Gew.-% Methacrylsäure,
- 1 bis 2 Gew.-%, insbesondere 1 bis 1,5 Gew.-% Acrylamid und/ oder Hydroxyethylacrylat
- 0 bis 2 Gew.-% (sofern erwünscht, z. B. 0,1 bis 2 Gew.-%) N-(2-Methacryloxyethyl)imidazolin-2-on.

In der Regel weisen Bindemittel auf Basis wässriger Polymerdispersionen herstellungsbedingt Emulgatoren auf, die der Stabilisierung der Polymerisatteilchen in der wässrigen Polymerdispersion dienen. Die erfindungsgemäßen Bindemittelzubereitungen enthalten wenigstens einen anionischen Emulgator und wenigstens einen nichtionischen Emulgator. Geeignete Emulgatoren sind die üblicherweise für derartige Zwecke eingesetzten Verbindungen. Eine Übersicht über geeignete Emulgatoren findet sich in Houben-Weyl, Methoden der organischen Chemie, Band XIV/1, Makromolekulare Stoffe, Georg-Thieme-Verlag, Stuttgart, 1961, S. 192-208.

Zu den bevorzugten anionischen Emulgatoren zählen Alkali- und Ammoniumsalze, insbesondere die Natriumsalze von Alkylsulfaten (A-kylrest: $C_8$-$C_{20}$), von Schwefelsäurehalbestern ethoxylierter Alkanole (EO-Grad: 2 bis 50, Alkylrest: $C_{10}$-$C_{20}$), und von Alkylsulfonsäuren (Alkylrest: $C_{10}$-$C_{20}$). Weiterhin Mono- und Di-$C_4$-$C_{24}$-alkyl-diphenyletherdisulfonate der allgemeinen Formel I,

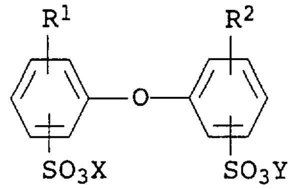

(I)

worin $R^1$ und $R^2$ Wasserstoff oder $C_4$-$C_{24}$-Alkyl, vorzugsweise $C_8$-$C_{16}$-Alkyl bedeuten und nicht gleichzeitig Wasserstoff sind, und X und Y Alkalimetallionen und/oder Ammoniumionen sein können. Häufig werden technische Gemische verwendet, die einen Anteil von 50 bis 90 Gew.-% des monoalkylierten Produktes aufweisen, beispielsweise Dowfax® 2A1 ($R^1$ = $C_{12}$-Alkyl; DOW CHEMICAL). Die Verbindungen I sind allgemein bekannt, z. B. aus der US-A-4,269,749, und im Handel erhältlich.

Bevorzugte anionische Emulgatoren sind die $C_{10}$-$C_{18}$-Alkylsulfate und die Sulfate ethoxylierter $C_{10}$-$C_{20}$-Alkanole mit einem Ethoxylierungsgrad $\leq$ 5 sowie die Mono- und Di-$C_8$-$C_{16}$-alkyldiphenylether-disulfonate. Dabei hat es sich als günstig erwiesen, wenn die erfindungsgemäßen Bindemittelzubereitungen als anionische Emulgatoren wenigstens ein $C_{10}$-$C_{18}$-Alkylsulfat und wenigstens ein Mono- oder Di-$C_8$-$C_{16}$-alkyldiphenyletherdisulfonat enthalten. Dann liegt das Gewichtsverhältnis der beiden Emulgatoren vorzugsweise im Bereich von 1:10 bis 10:1 und insbesondere im Bereich von 2:1 bis 1:2. In der Regel enthält das Bindemittel 0,1 bis 5 Gew.-%, vorzugsweise 0,5 bis 3 Gew.-% und insbesondere etwa 1 bis 2 Gew.-%, bezogen auf das Gesamtgewicht des Polymeren P, anionische Emulgatoren.

Bevorzugte nichtionische Emulgatoren sind aliphatische nichtionische Emulgatoren, beispielsweise Ethoxylate langkettiger Alkohole (EO-Grad: 3 bis 50, Alkylrest: $C_8$-$C_{36}$) und Polyethylenoxid/Poly-propylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von nativen Alkoholen oder Oxoalkoholen mit einem linearen oder verzweigten $C_{12}$-$C_{18}$-Alkylrest und einem Ethoxylierungsgrad von 8 bis 50. Besonders bevorzugte nichtionische Emulgatoren sind die Ethoxylate von Oxoalkoholen mit einem verzweigten $C_{10}$-$C_{16}$-Alkylrest und einem mittleren Ethoxylierungsgrad im Bereich von 8 bis 20 sowie Fettalkoholethoxylate mit einem linearen $C_{14}$-$C_{18}$-Alkylrest und einem mittleren Ethoxylierungsgrad im Bereich von 10 bis 30. Nicht-ionische Emulgatoren werden üblicherweise in einer Menge von 0,1 bis 5 Gew.-%, insbesondere 0,3 bis 3 Gew.-% und speziell im Bereich von 0,5 bis 2 Gew.-%, bezogen auf das Gesamtgewicht des Polymeren P, eingesetzt. Vorzugsweise wird die Gesamtmenge an anionischem und nichtionischem Emulgator 5 Gew.-%, bezogen auf das Gesamtgewicht des Polymers P nicht überschreiten und liegt insbesondere im Bereich von 0,5 bis 4 Gew.-%.

Vorzugsweise enthält die erfindungsgemäße Bindemittelzubereitung als anionischen Emulgator weder Alkylphenolsulfonate noch Sulfate alkoxylierter Alkylphenole. Vorzugsweise enthält die erfindungsgemäße Bindemittelzubereitung keine alkoxylierten Alkylphenole.

Erfindungsgemäß hat es sich als vorteilhaft erwiesen, wenn die Polymerisatteilchen des Bindemittelpolymers P in der wässrigen Dispersion einen gewichtsmittleren Polymerisatteilchendurchmesser unterhalb 500 nm, vorzugsweise im Bereich von 50 bis 300 nm und besonders bevorzugt im Bereich von 80 bis 200 nm aufweisen (bestimmt mittels Ultrazentrifuge oder Photonenkorrelationsspektroskopie; zur Teilchengrößenbestimmung mittels Ultrazentrifuge siehe z. B. W. Mächtle, Makromolekulare Chemie, 1984, Bd. 185, 1025-1039; W. Mächtle, Angew. Makromolekulare Chemie, 162, 1988, 35-42).

Die Herstellung der wässrigen Dispersionen des Bindemittelpolymeren P erfolgt durch radikalische wässrige Emulsionspolymerisation der genannten Monomere in Gegenwart wenigstens eines radikalischen Polymerisationsinitiators und gegebenenfalls einer grenzflächenaktiven Substanz.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate als auch um Azoverbindungen handeln. Als Polymerisationsinitiatoren werden häufig sog. Redoxinitiatoren verwendet, die aus wenigstens einem organischen Reduktionsmittel und wenigstens einem Peroxid und/oder Hydroperoxid zusammengesetzt sind, z. B. tert.-Butylhydroperoxid mit Schwefelverbindungen, z. B. dem Natriumsalz der Hydroxymethansulfinsäure, Natriumsulfit, Natriumdisulfit, Natriumthiosulfat oder Acetonbisulfit-Addukt oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z. B. Ascorbinsäure/Eisen(II)sulfat/Wasserstoffperoxid, wobei anstelle von Ascorbinsäure auch

häufig das Natriumsalz der Hydroxymethansulfinsäure, Acetonbisulfit-Addukt, Natriumsulfit, Natriumhydrogensulfit oder Natriumbisulfit und anstelle von Wasserstoffperoxid organische Peroxide wie tert.-Butylhydroperoxid oder Alkaliperoxodisulfate und/oder Ammoniumperoxodisulfat verwendet werden. Ebenfalls bevorzugte Initiatoren sind Peroxodisulfate, wie Natriumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 1,0 bis 4 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420.

Geeignete Emulgatoren für die radikalische Emulsionspolymerisation sind die oben genannten Emulgatoren. Vorzugsweise werden bei der Herstellung der erfindungsgemäßen Bindemittelpolymere P keine Schutzkolloide eingesetzt.

Das Molekulargewicht der Polymere P kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Bei halbkontinuierlichen Verfahren wird die Hauptmenge, d. h. wenigstens 70 %, vorzugsweise wenigstens 90 % der zu polymerisierenden Monomere kontinuierlich, einschließlich Stufen- oder Gradientenfahrweise, dem Polymerisationsansatz zugeführt. Diese Vorgehensweise wird auch als Monomerzulaufverfahren bezeichnet. Unter Monomerzulauf versteht man flüssige Monomermischungen, Monomerlösungen oder insbesondere wässrige Monomeremulsionen.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419, EP-A-614 922, EP-A-567 812 und dort zitierte Literatur sowie 'En-cyclopedia of Polymer Science and Technology', Vol. 5, John Wiley & Sons Inc., New York 1966, S. 847).

Vorzugsweise wird die Polymerisation in Anwesenheit von 0,01 bis 3 Gew.-% und insbesondere 0,02 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Saatlatex kann auch in situ aus den zu polymerisierenden Monomeren erzeugt werden, indem man zunächst eine geringe Menge der zu polymerisierenden Monomere als wässrige Emulsion zusammen mit einem Teil der grenzflächenaktiven Substanz vorlegt, diese Emulsion auf Polymerisationstemperatur erwärmt und dann einen Teil des Initiators in einer Portion zugibt.

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 100 °C und besonders bevorzugt zwischen 50 und 95 °C.

Im Anschluss an die eigentliche Polymerisationsreaktion ist es gegebenenfalls erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A-44 35 422, der DE-A 44 35 423 oder der DE-A 44 19 518 aufgeführt sind, erfolgen. Bevorzugt wird die Nachpolymerisation mit einem Redoxinitiatorsystem aus wenigstens einem organischen Peroxid und einem organischen Sulfit durchgeführt. Als Peroxide zur redoxinitiierten Nachpolymerisation kommen insbesondere neben Wasserstoffperoxid auch tert.-Butylhydroperoxid, Cumolhydroperoxid und Alkaliperoxodifulfate, wie Natrium- und Ammoniumperoxodisulfat, in Betracht. Geeignte Reduktionsmittel sind beispielsweise Natriumdisulfit, Natriumhydrogensulfit, Natriumdithionit, Natriumhydroxymethansulfinat, Formamidinsulfonsäure, Ascorbinsäure, Acetonbisulfit-Addukt, reduzierend wirkende Zuckerverbindungen oder wasserlösliche Mercaptane, z. B. 2-Mercaptoethanol. Gegebenenfalls wird zur redoxinitiierten Nachpolymerisation dem Redoxsystem ein lösliches Salz eines Metalls wechselnder Wertigkeit zugesetzt, z. B. Eisen-, Kupfer oder Vanadiumsalze und gegebenenfalls Komplexbildner wie EDTA. Die redoxinitiierte Nachpolymerisation erfolgt vorzugsweise bei Temperaturen im Bereich von 10 bis 100 °C, insbesondere bei 20 bis 90 °C. Die Nachpolymerisation erfolgt in der Regel über einen Zeitraum von 10 min bis 4 h. Die Zugabe des Initiators zur Nachpolymerisation kann in einer oder mehreren Portionen, gelöst oder ungelöst, oder kontinuierlich erfolgen. Bei der redoxinitiierten Nachpolymerisation erfolgt die Zugabe der Redoxpartner vorzugsweise getrennt voneinander.

Vorzugsweise werden die Dispersionen des Polymeren P vor ihrem Einsatz in den erfindungsgemäßen Zubereitungen, vorzugsweise duch Zugabe einer nichtflüchtigen Base, z. B. Alkalimetall- oder Erdalkalimetallhydroxiden oder nichtflüchtigen Aminen, auf einen pH-Wert im Bereich von pH 6 bis pH 10 eingestellt. Nichtflüchtige Amine sind beispielsweise ethoxilierte Diamine oder Polyamine, z. B. die unter der Handelsbezeichnung Jeffamine® (Texaco Chemical Co.) verkauften Produkte.

Die auf dem Wege der radikalischen, wässrigen Emulsionspolymerisation erhaltenen wässrigen Polymerdispersionen des Bindemittelpolymeren P weisen in der Regel Feststoffgehalte im Bereich von 40 bis 70 Gew.-% auf. Sie können direkt, ohne weitere Verarbeitung als Bindemittelzubereitung eingesetzt werden. Sie können jedoch auch mit den für die jeweilige Anwendung üblichen Zusätzen zu einer Bindemittelzubereitung konfektioniert werden. Ferner können sie zur Verhinderung von Keimbefall ein oder mehrere Biozide, z. B. 3-Isothiazolone, enthalten. In der Regel enthalten die erfindungsgemäßen Bindemittelzubereitungen nach ihrer Desodorierung weniger als 1000 ppm, vorzugsweise weniger als 500 ppm flüchtige organische Verbindungen wie Lösungsmittel oder nichtpolymerisierte Monomere.

Die erfindungsgemäßen Bindemittelzubereitungen bilden auch ohne Zusatz von flüchtigen organischen Substanzen wie Weichmachern oder Lösungsmitteln stabile Polymerfilme mit einer geringen Klebrigkeit und einer guten Blockfestigkeit aus, die bei Einwirkung von Feuchtigkeit nur wenig quellen.

Die erfindungsgemäßen Bindemittel auf Basis wässriger Dispersionen des Polymeren P eignen sich aus den vorgenannten Gründen in besonderem Maße zur Herstellung lösungsmittelfreier Beschichtungsmittel. Lösungsmittelfreie Beschichtungsmittel enthalten in der Regel weniger als 1000 ppm flüchtige organische Verbindungen. Unter flüchtigen organischen Verbindungen versteht man solche Verbindungen, die einen Siedepunkt unterhalb 260 °C bei Normaldruck aufweisen. Beispiele für Beschichtungsmittel sind Kunststoffdispersionsputze, Dichtungs- oder Versiegelungsmassen für poröse Bauteile und insbesondere pigmenthaltige Anstrichmittel wie Dispersionsfarben. Die erfindungsgemäßen Bindemittelzubereitungen sind insbesondere für die Herstellung von Dispersionsfarben geeignet. Demzufolge betrifft die vorliegende Erfindung auch Dispersionsfarben, die wenigstens ein Bindemittel auf Basis einer wäßrigen Polymerdispersion des Polymeren P enthalten, und insbesondere solche Dispersionsfarben, die weniger als 1000 ppm und insbesondere weniger als 500 ppm flüchtige, organische Lösungsmittel enthalten.

Die erfindungsgemäßen Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittelpolymer P, Füllstoff, Pigment, und polymere Hilfsmittel. Davon entfallen etwa

i) 3 bis 90 Gew.-%, vorzugsweise 10 bis 60 Gew.-%, auf feste Bindemittelbestandteile (Polymer P)

ii) 5 bis 85 Gew.-%, vorzugsweise 10 bis 50 Gew.-%, auf wenigstens ein anorganisches Pigment, sowie

iii) 0 bis 85 Gew.-%, vorzugsweise 5 bis 60 Gew.-%, auf anorganische Füllstoffe und

iv) 0,1 bis 40 Gew.-%, vorzugsweise 0,5 bis 20 Gew.-%, auf übliche Hilfsmittel,

wobei die Pigmentvolumenkonzentration PVK der Beschichtungsmittel erfindungsgemäß wenigstens 10, vorzugsweise wenigstens 15, und insbesondere wenigstens 20 beträgt und in der Regel 80 nicht überschreitet.

Aufgrund der geringen Klebrigkeit der Beschichtungen auf Basis der erfindungsgemäßen Bindemittelzubereitungen eignen sich die erfindungsgemäßen besonders für niedrig- und mittelpigmentierte Beschichtungsmittel wie Seidenglanzfarben, Latexfarben und Nassraumfarben, welche in der Regel eine PVK im Bereich von 25 bis 50 aufweisen. Bei letzteren ist insbesondere auch die geringe Quellbarkeit des verfilmten Bindemittels bei Einwirkung von Feuchtigkeit vorteilhaft.

Typische Pigmente ii) für die erfindungsgemäßen Zubereitungen, insbesondere für Dispersionsfarben, sind Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten.

Geeignete Füllstoffe iii) umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich Füllstoffmischungen besonders bewährt, z. B. Calciumcarbonat/Kaolin, Calciumcarbonat/Talkum.

Zur Erhöhung der Deckkraft und zur Einsparung von Weißpigmenten werden in den bevorzugten Dispersionsfarben häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft, des Farbtons und der Farbtiefe werden

vorzugsweise Abmischungen aus Farbpigmenten und Füllstoffen eingesetzt.

Zu den üblichen Hilfsmitteln iv) zählen Netz- oder Dispergiermittel, wie Natrium, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0,1 bis 1,0 Gew.-% bezogen auf das Gesamtgewicht der Dispersionsfarbe eingesetzt. Weiterhin umfassen die Hilfsmittel iv) in der Regel auch Entschäumer, Konservierungs- oder Hydrophobiermittel, Biozide, Fasern oder weitere Bestandteile.

Ferner umfassen die Hilfsmittel iv) gegebenenfalls auch Verdickungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolyme-risate und sog. Assoziativverdicker, beispielsweise Styrol-Maleinsäureanhydrid-Polymerisate oder vorzugsweise hydrophob modifizierte Polyetherurethane, wie sie beispielsweise von N. Chen et al. in J. Coatings Techn., Vol. 69, No. 867, 1997, S. 73 und von R.D. Hester et al. J. Coatings Technology, Vol. 69, No. 864, 1997, S. 109 beschrieben sind und auf deren Offenbarung hiermit in vollem Umfang Bezug genommen wird. Auch anorganische Verdikkungsmittel, z. B. Bentonite oder Hektorit, können verwendet werden. Verdickungsmittel werden im Allgemeinen in Mengen von 0,1 bis 10 Gew.-%, vorzugsweise 0,1 bis 5 Gew.-%, bezogen auf das Gesamtgewicht der wässrigen Zubereitung, verwendet.

Die im Folgenden aufgeführten Beispiele sollen die Erfindung verdeutlichen, ohne sie jedoch einzuschränken.

I. Herstellung und Charakterisierung der Polymerisatdispersionen (Polymere P)

Die mittlere Teilchengröße (z-Mittelwert) der Polymerisatteilchen wurde durch dynamische Lichtstreuung (Photonenkorrelationsspektroskopie) an einer 0,01 gew.-%igen Dispersion in Wasser bei 23 °C mittels eines Autosizers IIc der Fa. Malvern Instruments, England, ermittelt. Angegeben wird der mittlere Durchmesser der Kumulantenauswertung (cumulant z-average) der gemessenen Autokorrelationsfunktion.

Die Mindestfilmbildetemperatur (MFT) der Polymerisatdispersionen erfolgte in Anlehnung an die DIN 53787 (siehe auch Ullmanns Enzyklopädie der technischen Chemie, 4. Aufl. Bd. 19, VCH Weinheim 1980, S. 17). Als Messgerät diente eine sogenannte Filmbildebank (Metallplatte, an die ein Temperaturgradient angelegt wird). Auf die Filmbildebank wird nunmehr die wässrige Polymerisatdispersion mit einer Nassschichtdicke von 0,5 mm aufgebracht. In den Bereichen der Filmbildebank, deren Temperatur oberhalb der MFT liegt, bildet sich beim Trocknen ein klarer Film aus, wohingegen sich in den kühleren Bereichen Risse im Film auftreten und bei noch niedrigeren Temperaturen sich ein weißes Pulver bildet.

Allgemeine Herstellungsvorschrift:

In einem Polymerisationsgefäß wurden 340 g entionisiertes Wasser und 21 g einer 34 gew.-%igen, wässrigen Polystyrol-Saatdispersion ($d_{50}$ etwa 35 nm) vorgelegt und auf 90 °C erhitzt. Hierzu gab man unter Beibehaltung der Temperatur 5,4 g von Zulauf II zu. Nach 5 min gab man unter Beibehaltung der Temperatur innerhalb 150 min Zulauf 1 und die verbliebene Menge von Zulauf II in das Polymerisationsgefäß. Nach Beendigung der Zuläufe behielt man die Temperatur weitere 30 min bei und kühlte danach auf 80 °C. Bei dieser Temperatur gab man innerhalb 30 min 7,5 g einer 10 gew.-%igen wässrigen ter.-Butylhydroperoxid-Lösung in das Polymerisationsgefäß. Zeitgleich gab man eine Lösung aus 0,79 g Natriumdisulfit und 0,48 g Aceton in 16 ml entionisiertem Wasser zu. Danach gab man innerhalb von 5 min bei 80 °C 30 g einer 10 gew.-%igen Natronlauge zu. Dann wurde die erhaltene Dispersion mit Wasserdampf im Sinne einer Umlaufdesodorierung behandelt. Anschließend kühlte man auf Raumtemperatur und filtrierte über einen Metallfilter der Maschenweite 250 μm. Die erhaltenen Dispersionen hatten einen Feststoffgehalt von 49-50 Gew.-% und wiesen einen pH-Wert von 8 auf. Die Mindestfilmbildetemperatur aller Dispersionen lag bei ≤ 2 °C.

Zulauf 1: wässrige Monomeremulsion aus

243 g entionisiertem wasser[1])
750 g Monomere (Zusammensetzung siehe Tabelle 1)
4 g Emulgator (als wässrige Lösung; siehe Erläuterung zu Tabelle 1)

Zulauf II:

3,75 g Natriumperoxodisulfat
49,82 g entionisiertes Wasser

1) Bei Versuch 7 wurden 216 g und bei Versuch 8 wurden 250 g Wasser eingesetzt.

Tabelle 1

| Bsp. | BA [g] | **S** [g] | MMA [g] | EHA [g] | MAS [g] | AM [g] | AS [g] | UMA [g] | HEA [9] | AAMA [g] | Emulgator anionisch | nichtionisch |
|---|---|---|---|---|---|---|---|---|---|---|---|---|
| 1 | 450,0 | 198,8 | 75,0 | 0 | 18,8 | 15,0 | 0 | 0 | 0 | 0 | A + B[1)] | C[3)] |
| V2 | 450,0 | 198,8 | 75,0 | 0 | 0 | 15,0 | 18,8 | 0 | 0 | 0 | A + B | C |
| 3 | 450,0 | 273,8 | 0 | 0 | 18,8 | 15,0 | 0 | 0 | 0 | 0 | A + B | C |
| V4 | 450,0 | 0 | 273,8 | 0 | 18,8 | 15,0 | 0 | 0 | 0 | 0 | A + B | C |
| 5 | 0 | 279,8 | 75,0 | 369,0 | 18,8 | 15,0 | 0 | 0 | 0 | 0 | A + B | C |
| 6 | 450,0 | 198,8 | 60,0 | 0 | 18,8 | 15,0 | 0 | 15,0 | 0 | 0 | A + B | C |
| 7 | 450,0 | 198,8 | 75 | 0 | 18,8 | 15,0 | 0 | 0 | 0 | 0 | B[2)] | C |
| 8 | 450,0 | 198,8 | 75 | 0 | 18,8 | 15,0 | 0 | 0 | 0 | 0 | A + B | D[4)] |
| 9 | 450,0 | 198,8 | 75 | 0 | 18,8 | 0 | 0 | 0 | 7,5 | 0 | A + B | C |
| V10 | 450,0 | 198,8 | 93,8 | 0 | 0 | 15 | 0 | 0 | 0 | 0 | A + B | C |
| 11 | 450,0 | 198,8 | 60 | 0 | 18,8 | 15 | 0 | 0 | 0 | 15,0 | A + B | C |

BA = Butylacrylat
S = Styrol
MMA = Methylmethacrylat
EHA = 2-Ethylhexylacrylat
MAS = Methacrylsäure
AM = Acrylamid (50 gew.-%ige wässrige Lösung)
AS = Acrylsäure
UMA = N-(2-Methacryloyloxyethyl)-imidazolin-2-on
HEA = Hydroxyethylacrylat
AAMA = 2-Acetoacetoxyethylmethacrylat

Emulgatoren

1) A + B:13,3 g einer 45 gew.-%igen wässrigen Lösung von Bis-Natrium-p-dodecyldiphenyletherdisulfonat und 40,0 g einer 15 gew.-%igen wässrigen Lösung von Natriumdodecylsulfat; Dowfax® 2A1.

2) B: 80 g einer 15 gew.-%igen wässrigen Lösung von Natriumdodecylsulfat.

3) C: 56,3 g einer 20 gew.-%igen wässrigen Lösung eines ethoxylierten $C_{16}$-$C_{18}$-Fettalkohols (mittlerer Ethoxylierungsgrad von 18).

4) D: 56,3 g einer 20 gew.-%igen wässrigen Lösung von ethoxyliertem Isotridecanol (mittlerer Ethoxylierungsgrad von 8).

Tabelle 2

| Beispiel | TG (nm) [1)] | $T_g$(°C) 2) |
|---|---|---|
| 1 | 148 | 3,9 |
| V2 | 150 | 3,7 |
| 3 | 144 | 3,9 |
| V4 | 140 | 7,7 |
| 5 | 153 | 6,8 |

(fortgesetzt)

| Beispiel | TG (nm) 1) | $T_g$(°C) 2) |
|---|---|---|
| 6 | 151 | 7 |
| 7 | 142 | 7,2 |
| 8 | 147 | 4,9 |
| 9 | 147 | 6,8 |
| V10 | 149 | 2,8 |
| 11 | 144 | 0,6 |

1) Teilchengröße in [nm]
2) Glasübergangstemperatur (midpoint, bestimmt mittels DSC nach ASTM-D 3418-82) in °C

2. Erfindungsgemäße Dispersionsfarben

Die Herstellung der erfindungsgemäßen Dispersionsfarben erfolgte durch Abmischen der in Tabelle 3 für die Rezeptur angegebenen Komponenten in der dort angegebenen Reihenfolge (von oben nach unten) mittels eines Dissolvers. Der wechselnde Feststoffgehalt der eingesetzten Dispersionen wurde durch Wasser ausgeglichen.

Tabelle 3

| Farbrezeptur (Angaben in g) | |
|---|---|
| Wasser | 140 |
| Pigmentverteiler 1) | 8 |
| Konservierungsmittel 2) | 2 |
| Entschäumer 3) | 3 |
| Hydroxyethylcellulose (4%ige wässrige Lösung) 4) | 25 |
| Polyurethanverdicker (5%ige wässrige Lösung) 5) | 80 |
| $TiO_2$ (Rutil, 0,3 μm) 6) | 190 |
| Kreide (0,9 μm) 7) | 90 |
| Talk / Dolomit < 10 μm 8) | 20 |
| Entschäumer 3) | 1 |
| Dispersion (50 gew.-%ig) | 420 |

1) Pigmentverteiler MD 20 Dispergiermittel auf Basis eines Maleinsäure/Diisobuten-Copolymer-Natriumsalzes, 25 %ig in Wasser, BASF AG, Ludwigshafen
2) Parmetol A 26 Konservierungsmittel, Schülke & Mayr GmbH, Norderstedt
3) Byk 022 bzw. 024 Entschäumer, Byk-Chemie GmbH, Wesel
4) Natrosol 250 HHR Hydroxyethylcellulose, hochviskos, Hercules GmbH, Düsseldorf
5) Tafigel PUR 50 Polyurethanverdicker, Münzing GmbH, Heilbronn
6) Tioxide R-HD 2 Titandioxid, Tioxide Europe GmbH, Ratingen
7) Omyacarb Extra GU Calciumcarbonat (Marmor), 0,9 μ mittlerer Teilchendurchmesser, Omya GmbH, Köln
8) Naintsch SE micro Talk/Dolomit, Luzenac Deutschland GmbH, Düsseldorf

Prüfung der Blockfestigkeit der mittels der erfindungsgemäßen Dispersionsfarben erhaltenen Anstrichfilme

Die Dispersionen bzw. Anstrichstoffe wurden mit einem Kastenrakel mit 200 μm Spalthöhe auf Lenetafolie aufgezogen. Die Filme wurden 4 Tage im Normklima getrocknet. Anschließend wurden aus der beschichteten Folie Quadrate mit 5 cm Seitenlänge ausgeschnitten. Je 2 Quadrate wurden dann Beschichtung gegen Beschichtung aufeinander in einen Klimaschrank gelegt und mit einem 2 kg Gewicht belastet (Temperatur und Dauer wie in Tabelle 4 angegeben). Nach Ablauf der Beanspruchungszeit ließ man die Probekörper auf Raumtemperatur abkühlen und beurteilte die Kraft, die zum Trennen der beiden Folien aufgewandt werden mußte (0 = Folien fielen auseinander, 5 = Folien ließen sich nicht trennen).

Prüfung der Klebrigkeit (Tack) der Dispersionsfilme

Die Kontaktklebrigkeit (Tack) der Dispersionsfilme wurde nach der Methode von Zosel (s. A. Zosel, Lack- und Polymerfilme, Vincentz-Verlag, 1996, S.135 ff; Aufbau der Apparatur S.136) mit einem Stahlstempel bestimmt. Die Messung erfolgte bei 23 °C und 50 % relativer Luftfeuchtigkeit. Der Stahlstempel (Durchmesser 2 mm) wurde 10 sec mit einer Kraft von 1 N auf die Beschichtung gedrückt.

Prüfung der Wasseraufnahme der Dispersionsfilme

Die Wasseraufnahme ist die Wassermenge, die ein Polymerfilm nach 24 h Wasserlagerung aufgenommen hat. Die Angabe der Wasseraufnahme in Gew.-% bezieht sich auf die Masse des Films zu Beginn der Messung.

Vorgehensweise zur Bestimmung der Wasseraufnahme:

Aus den mit vollentsalztem Wasser auf einen Feststoffgehalt von 25 Gew.-% verdünnten, wässrigen Polymerisatdispersionen wurden ca. 500 μm dicke Polymerfilme hergestellt, indem man in einer Silikonpfanne eine definierte Menge der verdünnten wässriger Polymerisatdispersion über einen Zeitraum von 7 d bei 23 °C und 50% rel. Luftfeuchtigkeit verfilmte. Anschließend wurden die Polymerfilme der Silikonpfanne entnommen und flächige (4 x 5 cm) Filmstücke ausgestanzt. Diese wurden während 24 h bei 23 °C in 100 ml vollentsalztem Wasser gelagert. Die Wasseraufnahme der Filmstücke wurde nach Entnahme der Probekörper und Befreiung von an der Oberfläche anhaftendem Wasser mittels Abtupfen mit nichtfasrigem Filterpapier, gravimetrisch ermittelt. Die Angabe der Wasseraufnahme in Gew.-% in Tabelle 4 bezieht sich auf die Masse des Films zu Beginn der Messung.

Tabelle 4

| Beispiel | Blockfestigkeit Film 1 h bei 40°C | Blockfestigkeit Farbe 24 h bei 60°C | Tack Film bei 23°C [$J/m^2$] | Wasseraufnahme Film nach 24 h [Gew.-%] |
|---|---|---|---|---|
| 1 | 2 | 0-1 | 4,6 | 12,1 |
| V2 | 3 | 3 | 14,3 | 32,9 |
| 3 | 2-3 | 0-1 | 10,8 | 10,1 |
| V4 | 2 | 2 | 13,8 | 25,1 |
| 5 | 1-2 | 0 | 4,2 | 6,6 |
| 6 | 1-2 | 3 | 12,1 | 18,1 |
| 7 | 1-2 | 0-1 | 10,6 | 14,1 |
| 8 | 1-2 | 0-1 | 7,7 | 15,8 |
| 9 | 2 | 1-2 | 11,7 | 13,5 |
| V10 | 1-2 | 4 | 17,1 | 13,8 |
| 11 | 1-2 | 0 | 10,5 | 12,2 |

**Patentansprüche**

1. Bindemittelzubereitung mit einer Mindestfilmbildetemperatur unterhalb 10 °C, enthaltend wenigstens ein Bindemittelpolymer P in Form einer wässrigen Dispersion, die wenigstens einen anionischen Emulgator und wenigstens einen nichtionischen Emulgator enthält, worin das Bindemittelpolymer P aufgebaut ist aus:

   - 20 bis 50 Gew.-% wenigstens eines Monomers A1, ausgewählt unter vinylaromatischen Monomeren,
   - 0 bis 15 Gew.-% eines oder mehrerer Monomere A2, ausgewählt unter den $C_1$-$C_4$-Alkylestern der Methacrylsäure,
   - 0 bis 30 Gew.-% eines oder mehrerer Monomere A3, ausgewählt unter Acrylnitril und Methacrylnitril,

- 45 bis 70 Gew.-% wenigstens eines Monomers B, dessen Homopolymerisat eine Glasübergangstemperatur unterhalb 10°C aufweist, und das ausgewählt ist unter den $C_1$-$C_{18}$-Al-kylestern der Acrylsäure und den $C_5$-$C_{18}$-Alkylestern der Methacrylsäure,
- 2 bis 4 Gew.-% Methacrylsäure als Monomer C
- 0 bis 3 Gew.-% eines oder mehrerer Monomere D, ausgewählt unter den Amiden, den Hydroxy-$C_1$-$C_4$-Alkylestern, und den $C_1$-$C_4$-Alkyl-polyalkylenoxid-estern monoethylenisch ungesättigter $C_3$-$C_6$-Monocarbonsäuren,
- 0 bis 5 Gew.-% eines oder mehrerer von den Monomeren A1, A2, A3, B, C und D verschiedener Monomere E,

wobei die Gewichtsanteile aller Monomere auf 100 Gew.-% bezogen sind, die Summe der Gewichtsanteile der Monomere A1, A2 und A3 55 Gew.-% nicht überschreitet und der Gewichtsanteil der Monomere A2 wenigstens 5 Gew.-% beträgt, wenn der Gewichtsanteil der Monomere A3 0,5 Gew.-% unterschreitet.

**2.** Bindemittelzubereitung nach Anspruch 1, worin das Polymer P

- 20 bis 40 Gew.-% Styrol als Monomer A1 und
- 5 bis 15 Gew.-% Methylmethacrylat als Monomer A2

einpolymerisiert enthält.

**3.** Bindemittelzubereitung nach Anspruch 1 oder 2, worin die Monomere B ausgewählt sind unter Ethylacrylat, n-Butylacrylat und 2-Ethylhexylacrylat.

**4.** Bindemittelzubereitung nach einem der vorhergehenden Ansprüche, worin der anionische Emulgator ausgewählt ist unter $C_{10}$-$C_{18}$-Alkylsulfaten, den Sulfaten ethoxylierter $C_{10}$-$C_{20}$-Alkanole mit einem Alkoxylierungsgrad ≤ 5 und den Mono- und Di-$C_8$-$C_{16}$-alkyldiphenyletherdisulfonaten.

**5.** Bindemittelzubereitung nach einem der vorhergehenden Ansprüche, worin der nichtionische Emulgator ausgewählt ist unter ethoxylierten $C_{10}$-$C_{22}$-Alkanolen mit einem mittleren Ethoxylierungsgrad im Bereich von 8 bis 50.

**6.** Bindemittelzubereitung nach einem der Ansprüche 4 oder 5, enthaltend als anionischen Emulgator wenigstens ein $C_{10}$-$C_{18}$-Alkylsulfat und wenigstens ein Mono- oder Di-$C_{10}$-$C_{20}$-alkyldiphenyletherdisulfonat.

**7.** Bindemittelzubereitung nach einem der vorhergehenden Ansprüche, worin das Polymer P aufgebaut ist aus

- 50 bis 65 Gew.-% Butylacrylat und/oder 2-Ethylhexylacrylat,
- 20 bis 40 Gew.-% Styrol,
- 5 bis 10 Gew.-% Methylmethacrylat,
- 2 bis 4 Gew.-% Methacrylsäure,
- 1 bis 2 Gew.-% Acrylamid und/oder Hydroxyethylacrylat und
- 0 bis 2 Gew.-% N-(2-Methacryloxyethyl)imidazolin-2-on.

**8.** Dispersionsfarbe, enthaltend wenigstens eine Bindemittelzubereitung, wie in einem der Ansprüche 1 bis 7 definiert.

**9.** Dispersionsfarbe nach Anspruch 8, die weniger als 1000 ppm flüchtiger organischer Verbindungen enthält.

**10.** Dispersionsfarbe nach Anspruch 8 oder 9, mit einer Pigmentvolumenkonzentration PVK im Bereich von 25 bis 50.

## Claims

**1.** A binder formulation having a minimum film-forming temperature of below 10°C and comprising at least one binder polymer P in the form of an aqueous dispersion comprising at least one anionic emulsifier and at least one nonionic emulsifier, the binder polymer P being composed of:

- from 20 to 50% by weight of at least one monomer A1, selected from vinylaromatic monomers,
- from 0 to 15% by weight of one or more monomers A2, selected from the $C_1$-$C_4$ alkyl esters of methacrylic acid,
- from 0 to 30% by weight of one or more monomers A3, selected from acrylonitrile and methacrylonitrile,
- from 45 to 70% by weight of at least one monomer B whose homopolymer has a glass transition temperature

of below 10°C, selected from the $C_1$-$C_{18}$ alkyl esters of acrylic acid and the $C_5$-$C_{18}$ alkyl esters of methacrylic acid,
- from 2 to 4% by weight of methacrylic acid as monomer C,
- from 0 to 3% by weight of one or more monomers D selected from the amides, $C_1$-$C_4$ hydroxyalkyl esters and $C_1$-$C_4$ alkyl polyalkylene oxide esters of monoethylenically unsaturated $C_3$-$C_6$ monocarboxylic acids,
- from 0 to 5% by weight of one or more monomers E other than the monomers A1, A2, A3, B, C and D,

the weight fractions of all monomers being based on 100% by weight, the sum of the weight fractions of the monomers A1, A2 and A3 not exceeding 55% by weight and the weight fraction of the monomers A2 being at least 5% by weight if the weight fraction of the monomers A3 is below 0.5% by weight.

**2.** A binder formulation according to claim 1, wherein the polymer P contains

- from 20 to 40% by weight of copolymerized styrene as monomer A1,
and
- from 5 to 15% by weight of copolymerized methyl methacrylate as monomer A2.

**3.** A binder formulation according to claim 1 or 2, wherein the monomers B are selected from ethyl acrylate, n-butyl acrylate, and 2-ethylhexyl acrylate.

**4.** A binder formulation according to any of the preceding claims, wherein the anionic emulsifier is selected from $C_{10}$-$C_{18}$ alkyl sulfates, the sulfates of ethoxylated $C_{10}$-$C_{20}$ alkanols having a degree of alkoxylation < 5, and mono- and di($C_8$-$C_{16}$ alkyl)diphenyl ether disulfonates.

**5.** A binder formulation according to any of the preceding claims, wherein the nonionic emulsifier is selected from ethoxylated $C_{10}$-$C_{22}$ alkanols having an average degree of ethoxylation in the range from 8 to 50.

**6.** A binder formulation according to either of claims 4 and 5, comprising as anionic emulsifier at least one $C_{10}$-$C_{18}$ alkyl sulfate and at least one mono- or di ($C_{10}$-$C_{20}$ alkyl) diphenyl ether disulfonate.

**7.** A binder formulation according to any of the preceding claims, wherein the polymer P is composed of

- from 50 to 65% by weight of butyl acrylate and/or 2-ethylhexyl acrylate,
- from 20 to 40% by weight of styrene,
- from 5 to 10% by weight of methyl methacrylate,
- from 2 to 4% by weight of methacrylic acid,
- from 1 to 2% by weight of acrylamide and/or hydroxyethyl acrylate, and
- from 0 to 2% by weight of N-(2-methacryloxyethyl)-imidazolin-2-one.

**8.** An emulsion paint comprising at least one binder formulation as defined in any of claims 1 to 7.

**9.** An emulsion paint according to claim 8, which comprises less than 1000 ppm of volatile organic compounds.

**10.** An emulsion paint according to claim 8 or 9, having a pigment volume concentration PVC in the range from 25 to 50.

## Revendications

**1.** Préparation de liant ayant une température filmogène minimale inférieure à 10 °C, contenant au moins un polymère liant P sous la forme d'une dispersion aqueuse, qui contient au moins un émulsifiant anionique et au moins un émulsifiant non anionique, le polymère liant P étant formé à partir de :

- 20 à 50 % en poids d'au moins un monomère A1, choisi parmi les monomères aromatiques de vinyle,
- 0 à 15 % en poids d'un ou de plusieurs monomères A2, choisis parmi les esters alkyliques en $C_1$-$C_4$ de l'acide méthacrylique,
- 0 à 30 % en poids d'un ou de plusieurs monomères A3, choisis parmi l'acrylonitrile et le méthacrylonitrile,
- 45 à 70 % en poids d'au moins un monomère B, dont l'homopolymère présente une température de transition vitreuse inférieure à 10 °C, et qui est choisi parmi les esters alkyliques en $C_1$-$C_{18}$ de l'acide acrylique et les esters alkyliques en $C_5$-$C_{18}$ de l'acide méthacrylique,

- 2 à 4 % en poids d'acide méthacrylique en tant que monomère C,
- 0 à 3 % en poids d'un ou de plusieurs monomères D, choisis parmi les amides, les esters hydroxy-alkyliques en $C_1$-$C_4$ et les esters alkyliques en $C_1$-$C_4$-oxyde de polyalkylène d'acides monocarboxyliques en $C_3$-$C_6$ monoéthyléniquement insaturés,
- 0 à 5 % en poids d'un ou de plusieurs monomères E différents des monomères A1, A2, A3, B, C et D,

les proportions en poids de tous les monomères se rapportant à 100 % en poids, la somme des proportions en poids des monomères A1, A2 et A3 ne dépassant pas 55 % en poids et la proportion en poids des monomères A2 étant d'au moins 5 % en poids lorsque la proportion en poids des monomères A3 est inférieure à 0,5 % en poids.

**2.** Préparation de liant selon la revendication 1, dans laquelle le polymère P contient sous forme polymérisée

- 20 à 40 % en poids de styrène en tant que monomère A1 et
- 5 à 15 % en poids de méthacrylate de méthyle en tant que monomère A2.

**3.** Préparation de liant selon la revendication 1 ou 2, dans laquelle les monomères B sont choisis parmi l'acrylate d'éthyle, l'acrylate de n-butyle et l'acrylate de 2-éthylhexyle.

**4.** Préparation de liant selon l'une quelconque des revendications précédentes, dans laquelle l'émulsifiant anionique est choisi parmi les sulfates d'alkyle en $C_{10}$-$C_{18}$, les sulfates d'alcanols en $C_{10}$-$C_{20}$ éthoxylés ayant un degré d'alcoxylation $\leq$ 5 et les diphényletherdisulfonates mono- et di-alkyliques en $C_8$-$C_{16}$.

**5.** Préparation de liant selon l'une quelconque des revendications précédentes, dans laquelle l'émulsifiant non ionique est choisi parmi les alcanols en $C_{10}$-$C_{22}$ éthoxylés ayant un degré d'éthoxylation moyen dans la plage allant de 8 à 50.

**6.** Préparation de liant selon l'une quelconque des revendications 4 ou 5, contenant en tant qu'émulsifiant anionique au moins un sulfate d'alkyle en $C_{10}$-$C_{18}$ et au moins un diphényletherdisulfonate mono- ou di-alkylique en $C_{10}$-$C_{20}$.

**7.** Préparation de liant selon l'une quelconque des revendications précédentes, dans laquelle le polymère P est formé à partir de :

- 50 à 65 % en poids d'acrylate de butyle et/ou d'acrylate de 2-éthylhexyle,
- 20 à 40 % en poids de styrène,
- 5 à 10 % en poids de méthacrylate de méthyle,
- 2 à 4 % en poids d'acide méthacrylique,
- 1 à 2 % en poids d'acrylamide et/ou d'acrylate d'hydroxyéthyle, et
- 0 à 2 % en poids de N-(2-méthacryloxyéthyl)imidazolin-2-one.

**8.** Peinture en dispersion, contenant au moins une préparation de liant telle que définie dans l'une quelconque des revendications 1 à 7.

**9.** Peinture en dispersion selon la revendication 8, qui contient moins de 1 000 ppm de composés organiques volatils.

**10.** Peinture en dispersion selon la revendication 8 ou 9, ayant une concentration volumique de pigment PVK dans la plage allant de 25 à 50.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 609756 A
- EP 612805 A
- EP 466409 A
- EP 810274 A
- US 5610225 A
- US 4269749 A
- EP 40419 B
- EP 614922 A
- EP 567812 A
- DE 4435422 A
- DE 4435423 A
- DE 4419518 A


### In der Beschreibung aufgeführte Nicht-Patentliteratur


- Ullmanns Enzyklopädie d. Techn. Chem. vol. 15, 667
- **T.G. FOX.** *Bull. Am. Phys. Soc.,* 1956, 123
- Ullmann's Enzyklopädie der Techn. Chem. Verlag Chemie, 1980, vol. 19, 17-18
- Ullmann's Encyclopedia of Ind. Chem. VCH, 1992, vol. A 21, 169
- **J. BRANDRUP ; E.H. IMMERGUT.** Polymer Handbook. J. Wiley, 1975, 139-192
- **W. MÄCHTLE.** *Makromolekulare Chemie,* 1984, vol. 185, 1025-1039
- **W. MÄCHTLE.** *Angew. Makromolekulare Chemie,* 1988, vol. 162, 35-42
- En-cyclopedia of Polymer Science and Technology. John Wiley & Sons Inc, 1966, vol. 5, 847
- **N. CHEN et al.** *J. Coatings Techn.,* 1997, vol. 69 (867), 73
- **R.D. HESTER et al.** *J. Coatings Technology,* 1997, vol. 69 (864), 109
- Ullmanns Enzyklopädie der technischen Chemie. VCH, 1980, vol. 19, 17
- **A. ZOSEL.** Lack- und Polymerfilme. Vincentz-Verlag, 1996, 135 ff